**Europäisches Patentamt**

**European Patent Office**

**Office européen des brevets**

(19)

(11) Publication number: **0 210 001**
**A1**

(12) # EUROPEAN PATENT APPLICATION

(21) Application number: **86305105.8**

(22) Date of filing: **01.07.86**

(51) Int. Cl.⁴: **C 09 G 1/02**
**C 23 F 3/00, G 11 B 5/84**

(30) Priority: **25.07.85 JP 164779/85**

(43) Date of publication of application:
**28.01.87 Bulletin 87/5**

(84) Designated Contracting States:
**BE DE FR GB NL SE**

(71) Applicant: **FUJIMI KENMAZAI KOGYO KABUSHIKI KAISHA**
**1-1, Chiryo 2-chome Nishibiwajima-cho**
**Nishikasugai-gun Aichi-Ken 452(JP)**

(72) Inventor: **Senda, Tetsuji Tsukuda Building 5F-D**
**193 Oonogi 4-chome Nishi-ku**
**Nagoya-shi Aichi-ken, 452(JP)**

(72) Inventor: **Baba, Takashi**
**1-1 Chiryo, 2-chome, Nishibiwajima-cho**
**Nishikasugai-gun Aichi-ken, 452(JP)**

(74) Representative: **Taylor, Phillip Kenneth et al,**
**W.P. THOMPSON & CO. Coopers Building Church Street**
**Liverpool L1 3AB(GB)**

(54) Polishing composition for memory hard disc.

(57) A composition for polishing a layer of non-electrolysis nickel plating, an alumite layer or an aluminium substrate in a memory hard disc comprises water, a polishing agent of aluminium oxide, and a polishing accelerator comprising nickel nitrate or aluminium nitrate or both nickel nitrate and aluminium nitrate, or nickel sulfate and aluminium nitrate.

EP 0 210 001 A1

## DESCRIPTION

"POLISHING COMPOSITION FOR MEMORY HARD DISC".

The present invention relates to polishing compositions, particularly compositions for polishing memory hard discs of computers, word processors or the like.

In the production of memory hard discs a surface of a substrate of aluminium is polished, and a layer of storage magnetic medium is formed on the smoothed surface of the substrate. In recent years, a layer of non-electrolysis nickel plating, called also chemical nickel plating, or a layer of alumite is formed on a substrate of aluminium to form a pre-treated surface, the pre-treated surface is polished, and a layer of storage magnetic medium is formed on the smoothed pre-treated surface.

The polishing of memory hard discs is generally effected with a general-purpose polishing slurry formulated by suspending aluminium oxide as a polishing agent in water to form a slurry.

However, the general-purpose polishing slurry is not very effective as a polishing agent and has a low polishing efficiency for a memory hard disc. Moreover, surface defects such as orange peels may be produced and the polishing quality is low and therefore the general-purpose polishing slurry is not practicable. Consequently there is a need for an improved polishing composition for memory hard discs.

In view of the above-mentioned need, an object of the invention is to provide a polishing composition which is capable of polishing a memory hard disc at high efficiency and high quality.

The inventors have discovered that when a polishing accelerator comprising nickel nitrate or aluminium nitrate, is added to a slurry formulated by suspending a polishing agent of aluminium oxide in water, the slurry after the addition is excellent as a polishing composition for a memory hard disc. The inventors have also found that similar results are achieved when the polishing accelerator comprises nickel nitrate together with aluminium nitrate and when the polishing accelerator comprises nickel sulfate as well as aluminium nitrate.

According to the present invention a polishing composition is provided which comprises water, aluminium oxide as polishing agent and is characterised by the presence therein of a polishing accelerator which comprises nickel nitrate or aluminium nitrate. The polishing accelerator of the invention may comprise both nickel nitrate and aluminium nitrate and where it comprises aluminium nitrate it may also comprise nickel sulfate.

The polishing composition of the invention, as clearly seen from a description of the results of comparative tests which will hereinafter appear, can polish a memory hard disc at higher efficiency and higher quality than has hitherto been achieved in the prior art.

Examples of polishing compositions embodying the present invention are slurries formulated by suspending a polishing agent of $\alpha$-aluminium oxide ($\alpha$-$Al_2O_3$) in pure water or deionized water and adding thereto a polishing accelerator listed as follows:

Polishing Accelerators

(1) nickel nitrate ($Ni(NO_3)_2 \cdot 6H_2O$)

(2) aluminium nitrate ($Al(NO_3)_3 \cdot 9H_2O$)

(3) nickel sulfate ($NiSO_4 \cdot 6H_2O$) and aluminium nitrate ($Al(NO_3)_3 \cdot 9H_2O$)

(4) nickel nitrate ($Ni(NO_3)_2 \cdot 6H_2O$) and aluminium nitrate ($Al(NO_3)_3 \cdot 9H_2O$)

The polishing accelerator may be present in solution in an amount of from 1~20% by weight based on the total weight of the slurry.

The polishing agent may be contained in the slurry in an amount of from 2~30% by weight, based on the total weight of the slurry and may have a mean particle size of 0.7~4.0 μm and a maximum particle size of 20μm or less.

The polishing agent of $\alpha$-aluminium oxide may be prepared by calcining granular boehmite ($Al_2O_3 \cdot H_2O$, AlO(OH)) at a temperature of 1,100 ~ 1,200°C for 2 to 3 hours, crushing relatively large particles into finer particles and separating particles falling within a predetermined particle size distribution.

-4-

In order to polish a memory hard disc using a polishing composition of the embodiment, the polishing composition is supplied into a clearance between a surface of the memory hard disc to be polished and a surface of a polishing pad which is slidable on the surface of the memory hard disc in similar manner to the prior art.

Description will now be made of a series of comparative tests conducted to ascertain the advantages of the invention.

A group of polishing complsitions embodying the invention were prepared in the form of slurries each formulated by suspending a polishing agent of $\alpha$-aluminium oxide ($\alpha$-$Al_2O_3$) in deionized water and adding thereto a polishing accelerator as hereinafter listed at following weight percent.

Polishing Accelerators and Weight Percent

| | |
|---|---|
| (1) nickel nitrate ($Ni(NO_3)_2 \cdot 6H_2O$) | 10 % |
| (2) aluminium nitrate ($Al(NO_3)_3 \cdot 9H_2O$) | 10 % |
| (3.1) nickel sulfate ($NiSO_4 \cdot 6H_2O$) | 4 % |
| aluminium nitrate ($Al(NO_3)_3 \cdot 9H_2O$) | 6 % |
| total | 10 % |
| (3.2) nickel sulfate ($NiSO_4 \cdot 6H_2O$) | 2 % |
| aluminium nitrate ($Al(NO_3)_3 \cdot 9H_2O$) | 3 % |
| total | 5 % |
| (4.1) nickel nitrate ($Ni(NO_3)_2 \cdot 6H_2O$) | 4 % |

|  |  |
|---|---|
| aluminium nitrate (Al(NO3)3 · 9H2O) | 6 % |
| total | 10 % |
| (4.2) nickel nitrate (Ni(NO3)2 · 6H2O) | 2 % |
| aluminium nitrate (Al(NO3)3 . 9H2O) | 3 % |
| total | 5 % |

In a polishing composition of the prior art, a slurry of the polishing composition of the invention without adding the polishing accelerator is used.

In the polishing slurries of the invention and the prior art, the polishing agent is contained at 20 % by weight, and has mean particle size of $1.3 \mu$m and maximum particle size of $20 \mu$m or less.

The polishing agent of $\alpha$-aluminium oxide was prepared by calcining granular boehmite ($Al_2O_3 \cdot H_2O$, Al₂(OH)) at a temperature of 1,150 °C for 3 hours, crushing relatively large particles into finer particles and separating particles falling within a predetermined particle size distribution.

a. Non-electrolysis nickel · phosphorus plating

A memory hard disc is constituted by forming layers of non-electrolysis nickel · phosphorus ($N_i$-P) plating each having thickness of $30 \mu$m on both surfaces of a circular ring-shaped substrate of aluminium having outer diameter of 130 mm. The plating layer is formed in chemical composition of nickel 90 ～ 92 % and phosphorus 8 ～ 10 %.

-6-

The disc was installed to a double sided polishing machines, with suede polishing pads abutting on the plating layers of both surfaces of the disc. The disc and each polishing pad were slided relatively, and the disc was polished for 10 minutes. During polishing, the polishing slurry of the invention or the prior art was supplied between the disc and both polishing pads at rate of 0.1 $\ell$/min. The polishing pressure was 50 g/cm$^2$.

After polishing, the polished surface of the plating layers on both surfaces of the disc were examined for the presence of surface defects. Then, thickness of the disc was measured and the thickness decrease at both surfaces due to the polishing was calculated so as to obtain the removal rate.

The test results are shown in Table 1 below.

## Table 1

### Polishing Accelerators and Polishing Results

| | Polishing Accelerator | Polishing Accelerator by weight % | pH Value (25°C) | Removal Rate μm/10min | Surface Defect |
|---|---|---|---|---|---|
| Prior Art | none | 0 | 7.0 | 3.1 | orange peels |
| Invention | (1) nickel nitrate | 10 | 6.4 | 6.0 | none |
| | (2) aluminium nitrate | 10 | 3.2 | 7.4 | " |
| | (3.1) nickel sulfate & aluminium nitrate | 10 | 3.6 | 7.0 | " |
| | (3.2) nickel sulfate & aluminium nitrate | 5 | 3.8 | 5.2 | " |
| | (4.1) nickel nitrate & aluminium nitrate | 10 | 3.5 | 6.8 | " |
| | (4.2) nickel nitrate & aluminium nitrate | 5 | 3.7 | 5.0 | " |

As seen from Table 1 above, the polishing slurry of the invention provides a higher removal rate of a non-electrolysis nickel · phosphorus plating layer, i.e., a better polishing efficiency than that of the prior art, and no surface defect is found therefore the polished surface has high quality.

b. Non-electrolysis nickel · boron plating

A memory hard disc is constituted by forming layers of non-electrolysis nickel · boron (Ni-B) plating each having thickness of 30 μm on both surfaces of a circular ring-shaped substrate of aluminium having outer diameter of 130 mm. The

-8-

plating layer is formed in chemical composition of nickel 99.0 ~ 99.5 % and boron 0.5 ~ 1.0 %.

The disc was polished in similar manner to the polishing tests of layers of non-electrolysis nickel · phosphorus plating.

The test results are shown in Table 2 below.

Table 2

Polishing Accelerators and Polishing Results

| | Polishing Accelerator | Polishing Accelerator by weight % | pH Value (25°C) | Removal Rate $\mu$m/10min | Surface Defect |
|---|---|---|---|---|---|
| Prior Art | none | 0 | 7.0 | 2.1 | orange peels |
| Invention | (1) nickel nitrate | 10 | 6.4 | 5.0 | none |
| | (2) aluminium nitrate | 10 | 3.2 | 6.3 | none |

As seen from Table 2 above, the polishing slurry of the invention provides a higher removal rate of a non-electrolysis nickel · boron plating layer, i.e., a better polishing efficiency than that of the prior art, and no surface defect is found and therefore the polished surface has high quality.

c. Alumite

A memory hard disc is constituted by forming layers of sulfate alumite in place of layers of non-electrolysis nickel plating.

The disc was polished in similar manner to the polishing

-9-

tests of layers of non-electrolysis nickel plating. The test results are shown in Table 3 below.

Table 3

Polishing Accelerators and Polishing Results

| | Polishing Accelerator | Polishing Accelerator by weight % | pH Value (25°C) | Removal Rate $\mu m/10min$ | Surface Defect |
|---|---|---|---|---|---|
| Prior Art | none | 0 | 7.0 | 1.0 | orange peels |
| Invention | (1) nickel nitrate | 10 | 6.4 | 5.3 | none |
| | (2) aluminium nitrate | 10 | 3.2 | 7.6 | none |

As seen from Table 3 above, the polishing slurry of the invention provides a higher polishing efficiency of an alumite layer and higher polishing quality than that of the prior art.

d. Aluminium

A memory hard disc is a substrate of aluminium itself without forming a layer of non-electrolysis nickel plating or an alumite layer.

The disc was polished in similar manner to the above-mentioned cases, and the test results are shown in Table 4 below.

-10-

Table 4

Polishing Accelerators and Polishing Results

| | Polishing Accelerator | Polishing Accelerator by weight % | pH Value (25°C) | Removal Rate μm/10min | Surface Defect |
|---|---|---|---|---|---|
| Prior Art | none | 0 | 7.0 | 1.5 | orange peels |
| Invention | (1) nickel nitrate | 10 | 6.4 | 6.8 | none |
| | (2) aluminium nitrate | 10 | 3.2 | 8.0 | " |
| | (3.1) nickel sulfate & aluminium nitrate | 10 | 3.6 | 7.5 | " |
| | (3.2) nickel sulfate & aluminium nitrate | 5 | 3.8 | 6.0 | " |
| | (4.1) nickel nitrate & aluminium nitrate | 10 | 3.5 | 7.0 | " |
| | (4.2) nickel nitrate & aluminium nitrate | 5 | 3.7 | 5.3 | " |

As seen from Table 4 above, the polishing slurry of the invention provides a better polishing efficiency of aluminium and higher polishing quality than that of the prior art.

## CLAIMS.

1. A polishing composition for a memory hard disc comprising water and aluminium oxide as a polishing agent characterised in that the composition also includes a polishing accelerator which comprises nickel nitrate or aluminium nitrate.

2. A polishing composition as claimed in claim 1, characterised in that the polishing accelerator comprises nickel nitrate together with aluminium nitrate.

3. A polishing composition as claimed in claim 1, characterised in that the polishing accelerator is aluminium nitrate together with nickel sulfate.

4. A polishing composition as claimed in any of claims 1 to 3, characterised in that the polishing accelerator is present in the composition in an amount of from 1 to 20% by weight based on the total weight of the water, polishing agent and polishing accelerator.

5. A polishing composition as claimed in any of claims 1 to 4, characterised in that the aluminium oxide is present in the composition in an amount of 2 to 30% by weight based on the total weight of the water, polishing agent and polishing accelerator.

6. A polishing composition as claimed in any of claims 1 to 5, characterised in that the aluminium oxide has a mean particle size of from 0.7 to 4.0 μm and a maximum particle size of 20 μm or less.

7. A polishing composition as claimed in any of claims 1 to 6, characterised in that the aluminium oxide is ∝-aluminium oxide prepared by calcining granular boehmite at a temperature of 1,000 to 1200°C for 2 to 3 hours, crushing the calcined material into fine particles and separating particles falling within a predetermined particle size distribution.

8. A polishing composition as claimed in any of the preceding claims, characterised in that the nickel nitrate is nickel nitrate hexahydrate.

9. A polishing composition as claimed in any of the preceding claims, characterised in that the aluminium nitrate is aluminium nitrate nonahydrate.

10. A polishing composition as claimed in claim 3, characterised in that the nickel sulfate is nickel sulfate hexahydrate.

......................................................

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | GB-A-2 011 460 (FUJIMI KENMAZAI KOGYO) <br> * Abstract; claims 1,2; page 2, lines 5-9; page 2, table 1 * | 1,4-7, 9 | C 09 G 1/02 <br> C 23 F 3/00 <br> G 11 B 5/84 |
| Y | US-A-4 383 857 (A.F. STEEVES) <br> * Abstract; column 3, example * | 1 | |
| A | US-A-4 475 981 (W.V. REA) <br> * Abstract; claim 10 * | 1 | |

TECHNICAL FIELDS SEARCHED (Int. Cl.4)

C 09 G
C 09 K

The present search report has been drawn up for all claims

| Place of search | Date of completion of the search | Examiner |
|---|---|---|
| THE HAGUE | 31-10-1986 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82